# EUROPEAN PATENT SPECIFICATION

(11) **EP 3 875 826 B1**
(45) Date of publication and mention of the grant of the patent: **26.10.2022**
(21) Application number: 21160126.5
(22) Date of filing: 02.03.2021
(51) Int. Cl.: F16L 37/088, F16L 37/14

(54) **COUPLING ASSEMBLY FOR AN AIR CONDITIONING UNIT OF A VEHICLE**
KUPPLUNGSANORDNUNG FÜR EINE KLIMAANLAGE EINES FAHRZEUGS
ENSEMBLE DE COUPLAGE D'UNE UNITÉ DE CONDITIONNEMENT D'AIR D'UN VÉHICULE

(30) Priority: 04.03.2020 IT 202000004567
(43) Date of publication of application: 08.09.2021
(73) Proprietor: DENSO THERMAL SYSTEMS S.p.A., 10046 Poirino (Torino) (IT)
(72) Inventor: BASEGGIO, Daniele, I-10046 POIRINO (Torino) (IT); BERGAMO, Luca, I-10046 POIRINO (Torino) (IT)
(74) Representative: Vanzini, Christian

(56) References cited:
- EP-A1- 2 199 652
- EP-A2- 2 293 004
- DE-U1- 29 819 176

## Description

The present invention relates to a coupling assembly for an air conditioning unit of a vehicle, comprising:
a tubular component on which a first and a second shoulder are formed extending radially outwards and delimiting a mounting area, and
a coupling component for coupling the tubular component to a receiving part, wherein the coupling component constitutes a separate component mounted on the tubular component at said mounting area, and wherein the coupling component is securable to the receiving part by means of a clamp that engages in slots formed in the receiving part and in the coupling component.

In the prior art, tubular components for air conditioning units of vehicles are known which are made of plastics material and which comprise a coupling component, made as one piece with the tubular component, for coupling the tubular component to a receiving part. Metal tubes onto which plastics material is co-molded in order to create the coupling component are also known. These coupling assemblies are complex to produce, and the coupling assemblies made in this manner may also only be used for the specific conditions of use for which they were made and may not be adapted to other applications.

Coupling assemblies of the kind defined at the outset are also known, wherein the coupling component constitutes a separate component mounted on the tubular component, and wherein the coupling component is securable to the receiving part by means of a clamp that engages in slots formed in the receiving part and in the coupling component. In these coupling assemblies, the coupling component is axially fitted onto the tubular component up to the point where the former locks onto the latter. This known solution is advantageous in that the individual components may be manufactured easily and relatively cheaply, and this solution also allows the individual components to be flexibly applied to various conditions of use.

EP 2293004 A2 discloses a coupling assembly of the kind defined at the outset, wherein the coupling component consists of a collar which encircles the tubular component and comprises a plurality of elastic tongues that extend axially forward and radially inwards and are configured to engage in said mounting area of the tubular component at the first shoulder, and an inner shoulder which extends radially inwards and is configured to abut axially against said second shoulder.

The object of this invention is to provide an alternative solution which has advantages comparable to those of the known solution described above.

In view of this object, the subject matter of the invention is a coupling assembly having the features defined in claim 1.

In a coupling assembly of this kind, the tubular component and the coupling component may be manufactured separately, thus simplifying the manufacturing of the components and making it more economical and flexible with respect to the known solution in which the components are co-molded. It is also possible to connect the same tubular component to different receiving parts using differently designed coupling components.

According to the invention, the inner shoulder of the coupling component is made of a less rigid material than the material of the coupling component. In particular, the coupling component may be made of plastics material and the inner shoulder may be made of elastomeric material co-molded on the coupling component. In this way, the inner shoulder of the coupling component makes it possible to compensate for axial mounting tolerances and forms a seal that prevents the passage of liquids into the gap between the coupling component and the tubular component.

In particular, the inner shoulder is arranged at a level which is radially further outward than the elastic tongues of the coupling component.

A seal may be provided between the coupling component and the receiving part. This seal would prevent losses of fluid or gas between the coupling component and the receiving part.

The tubular component may be made of metal material, for example aluminum. Metal tubular components may be used for more severe temperature and pressure conditions than plastics tubular components. The tubular component may, however, be made of a different material, for example plastics material.

The coupling component may be made of plastics material. This allows the coupling component to have a particularly simple design. The coupling component may, however, be made of a different material, for example metal material.

Features and advantages of the arrangement according to the invention will become clearer from the following detailed description of an embodiment of the invention, made with reference to the accompanying drawings, provided purely for illustrative and non-limiting purposes, in which:
- Fig. 1 is a perspective view showing a coupling assembly according to the invention, before the receiving part is coupled to the coupling component mounted on the tubular component;
- Fig. 2 is a sectional view of the coupling assembly in the condition from Fig. 1;
- Fig. 3 is a perspective view showing the tubular component together with the coupling component inserted into the receiving part;
- Fig. 4 is a sectional view of the assembly in the condition from Fig. 3;

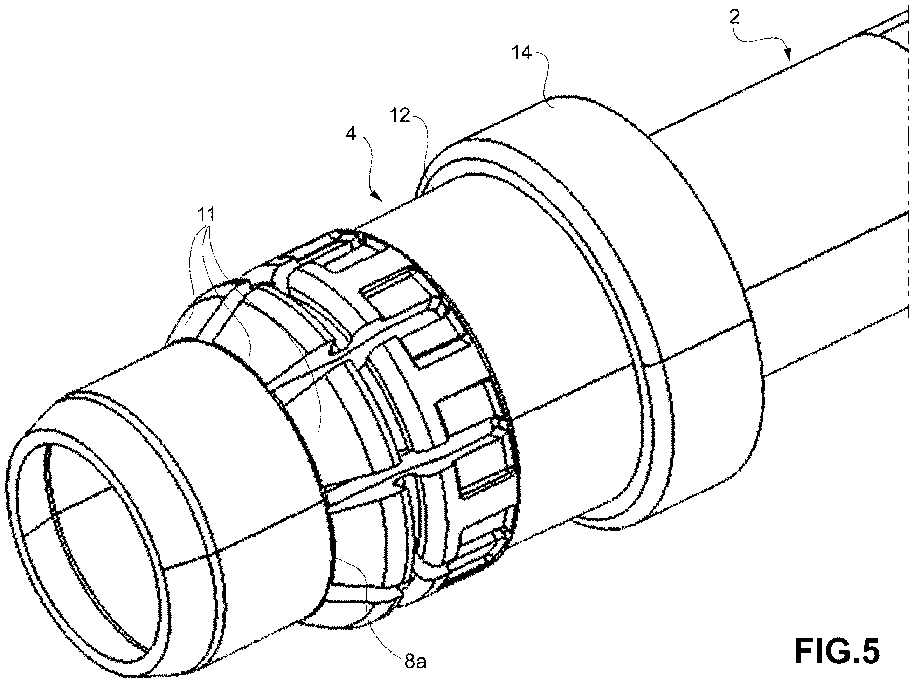

- Fig. 5 is a perspective view of just the tubular component together with the mounted coupling component;
- Fig. 6 is a sectional view of the tubular component together with the coupling component;

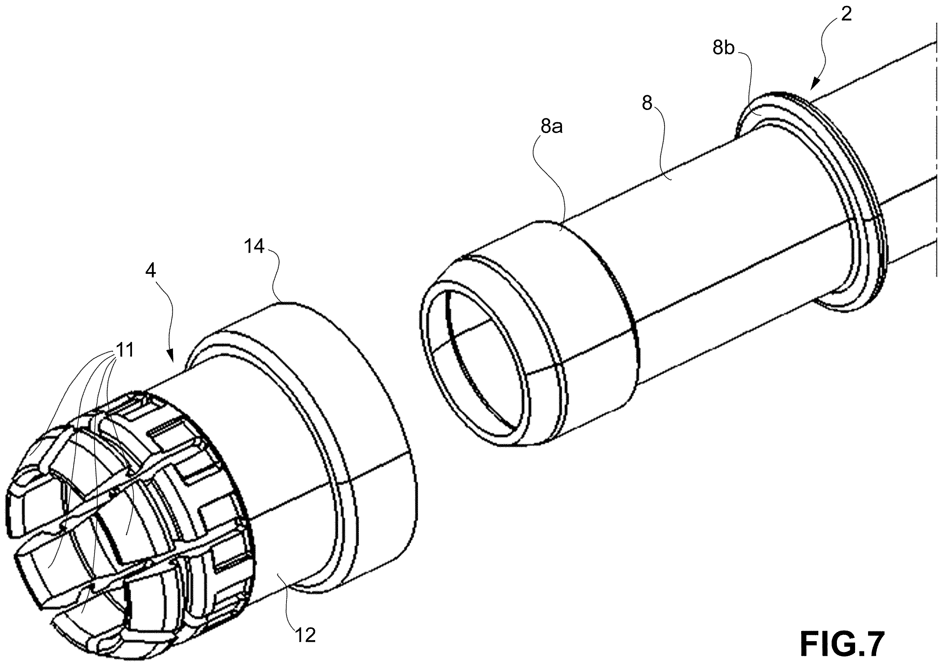

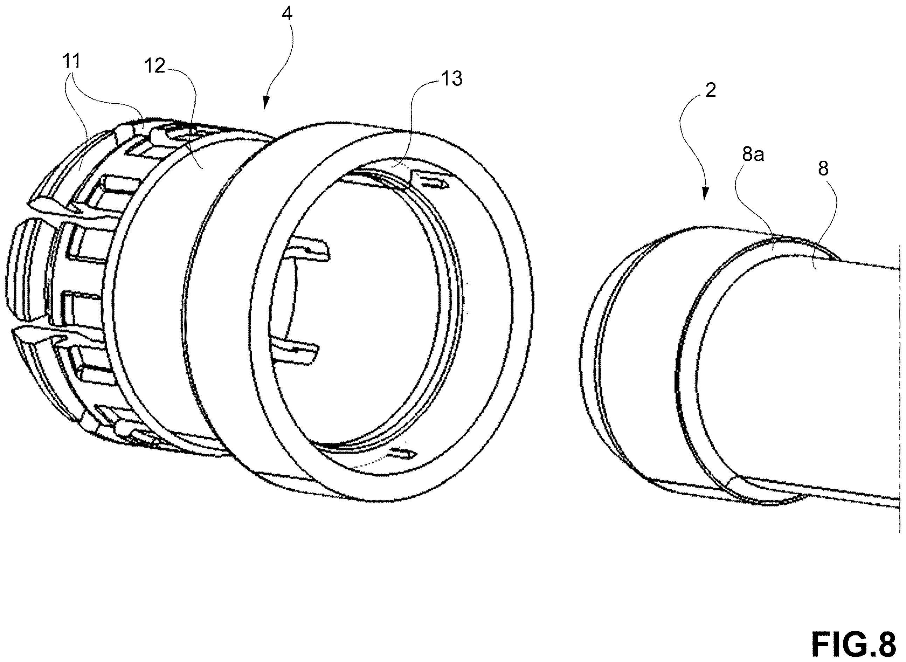

- Fig. 7 and 8 are perspective views showing the tubular component and the coupling component before being assembled; and

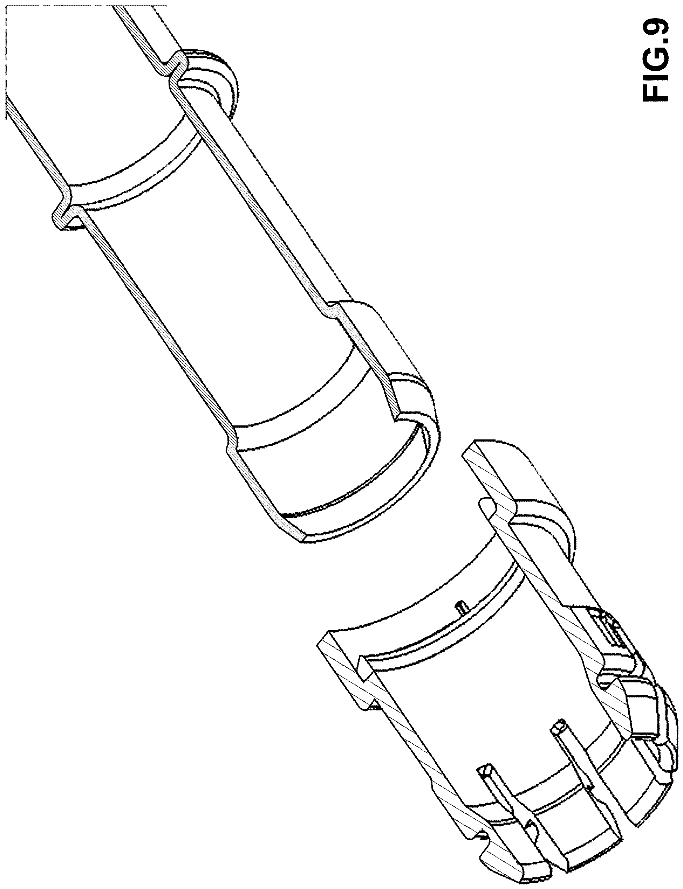

- Fig. 9 is a sectional view of the tubular component and the coupling component before being assembled.

With reference to the figures, a coupling assembly for an air conditioning unit of a vehicle is indicated as a whole by reference sign 1. A tubular component 2 is connected to a receiving part 6 by means of a coupling component 4.

A mounting area 8 for the coupling component 4 is formed on the tubular component 2. The mounting area 8 is delimited at one end by a first shoulder 8a, which in the example shown is provided by a terminal part of the tubular component 2 that has a greater diameter, and at the other end by a second shoulder 8b, which in the example shown is provided by a circumferential projection of the tubular component 2. The first and the second shoulder 8a, 8b have different diameters. In particular, the second shoulder 8b has a greater diameter than the first shoulder 8a.

The coupling component 4 is mounted on the tubular component 2 at the mounting area 8 and is held axially between the first shoulder 8a and the second shoulder 8b.

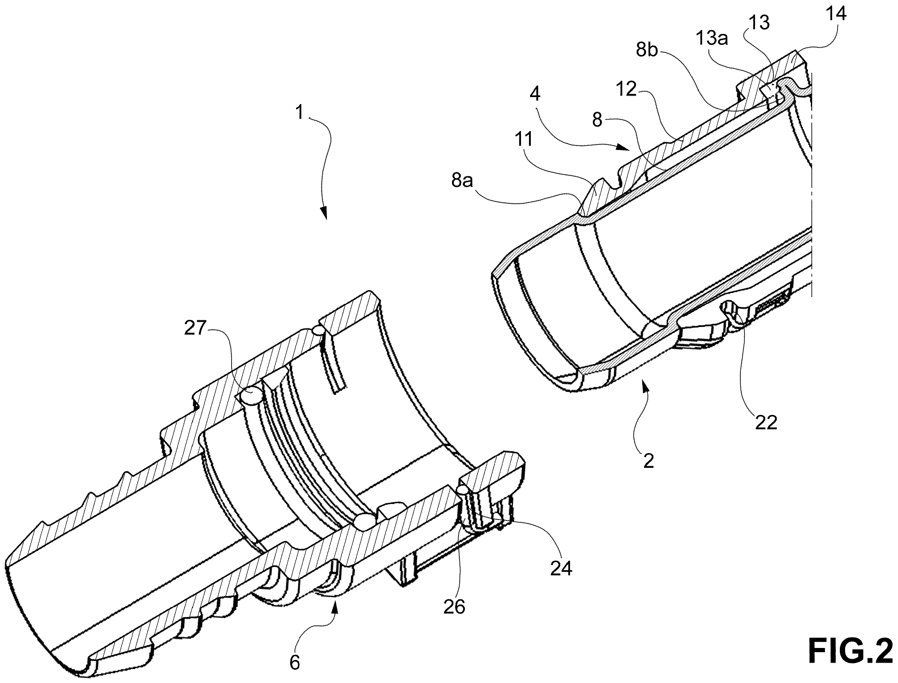

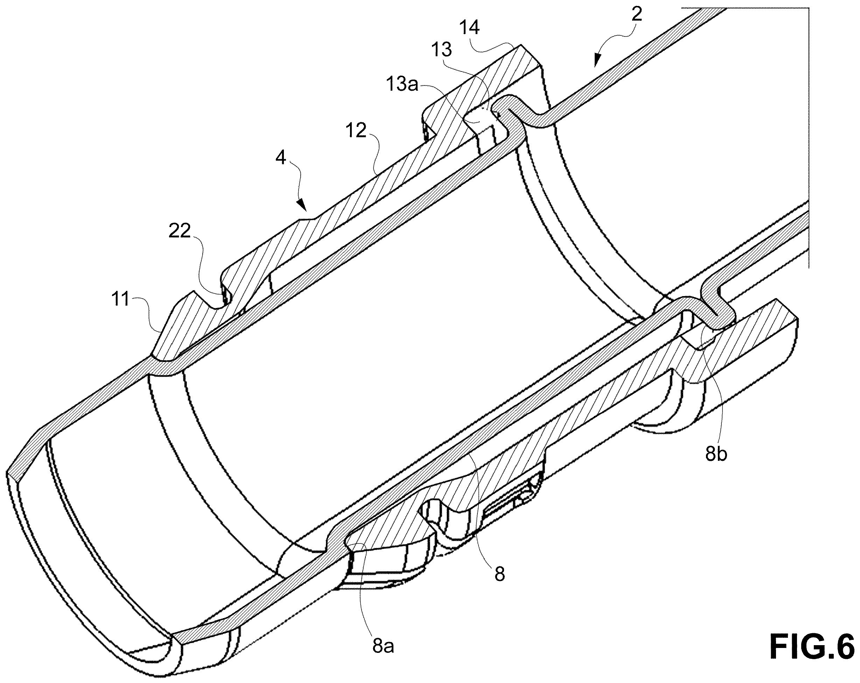

As shown in the figures, the coupling component 4 consists of a collar which encircles the tubular component 2. At a distal end, the coupling component 4 comprises a plurality of elastic tongues 11 which extend forward and radially inward from a main part of the coupling component 4, which main part is indicated by reference sign 12 in the figures. As may be seen in Fig. 2, 4 and 6, for example, the main part 12 of the coupling component 4 has an inner diameter greater than the outer diameter of the first shoulder 8a of the tubular component 2, although on the elastic tongues 11 this inner diameter tapers to a minimum value at the tips of the elastic tongues 11, which minimum value is less than the outer diameter of the first shoulder 8a.

By virtue of the arrangement described above, it is possible to snap-fit the coupling component 4 onto the tubular component 2, by sliding the components one inside the other in such a way as to spread apart the elastic tongues 11 of the coupling component 4 at the first shoulder 8a, which elastic tongues then release once they have reached the mounting area 8 of the tubular component 2.

The coupling component 4 also comprises an inner shoulder 13 extending radially inwards from a rear portion 14 of the coupling component 4. As may be seen in Fig. 2, 4 and 6, for example, the rear portion 14 of the coupling component 4 has an inner diameter which is greater than the inner diameter of the main part 12 of the coupling component 4 and greater than the outer diameter of the second shoulder 8b. The inner shoulder 13 is therefore arranged at a level which is radially further outward than the elastic tongues 11 of the coupling component 4.

The inner shoulder 13 of the coupling component 4 is configured to abut axially against the second shoulder 8b when the coupling component 4 is positioned in the mounting area 8 of the tubular component 2, i.e. when the elastic tongues 11 are snapped into the mounting area 8. In this position, the elastic tongues 11 abut against the first shoulder 8a while the inner shoulder 13 abuts against the second shoulder 8b.

The inner shoulder 13 is formed on a portion 13a of the coupling component 4 that is made of a less rigid material than the material with which the rest of the coupling component is made. For example, the coupling component 4 may be made of plastics material and the portion 13a on which the inner shoulder 13 is formed may be made of elastomeric material, in particular co-molded on the coupling component 4.

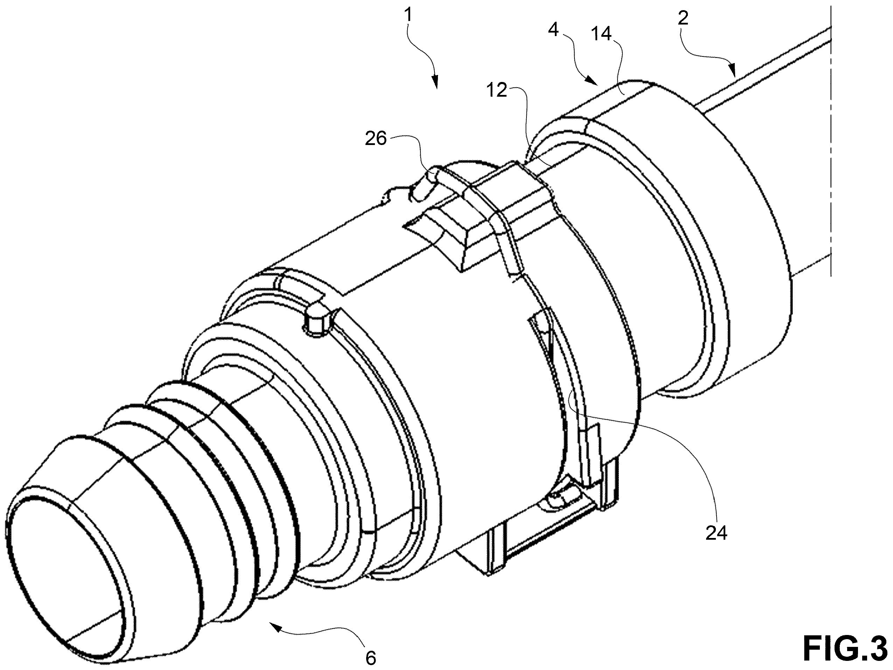

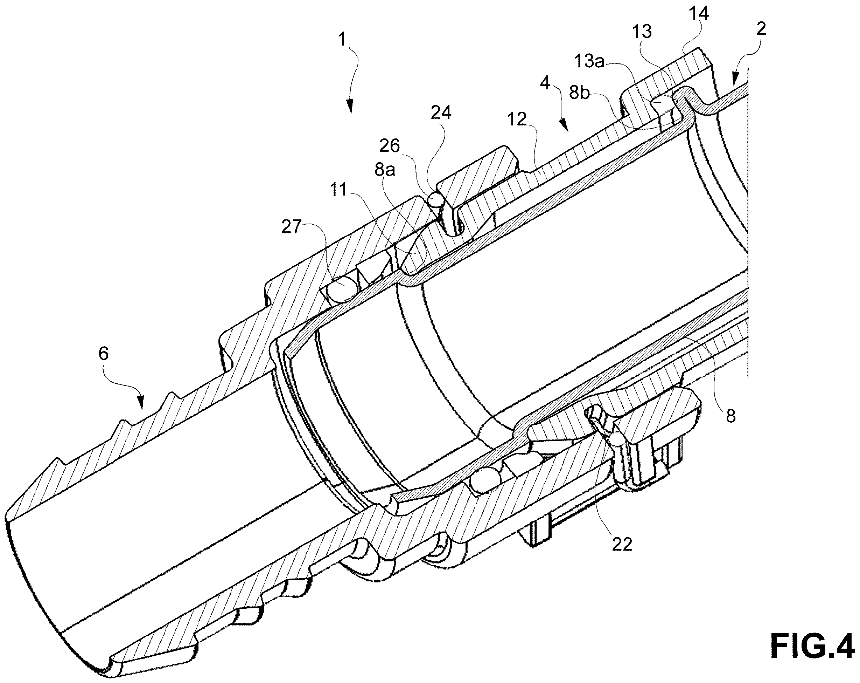

In the condition shown in Fig. 3 and 4, the coupling component 4 is inserted in the receiving part 6. In this position, slots 22 formed on the coupling component 4 are axially aligned with slots 24 formed on the receiving part 6. In the condition in which the coupling component 4 is secured to the receiving part 6, a clamp 26 extends through the slots 22 in the coupling component 4 and through the slots 24 in the receiving part 6, thus producing a form-fitting connection between the coupling component 4 and the receiving part 6. This connection fixes the coupling component 4 to the receiving part 6 in the axial direction.

The clamp 26 mounted on the receiving part 6 is releasable, so that the form-fitting connection between the coupling component 4 and the receiving part 6 may be broken.

A seal 27 is arranged between the coupling component 4 and the receiving part 6.

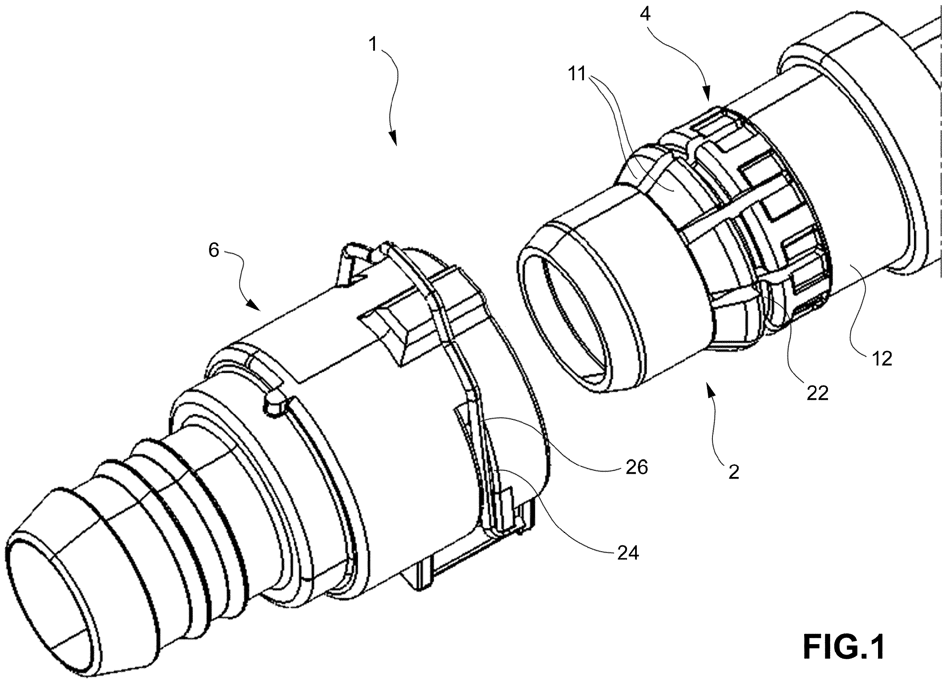

The assembly shown in Fig. 1-4 may be assembled in the following manner.

First, the coupling component 4 is coupled to the tubular component 2 by sliding one inside the other until the elastic tongues 11 of the coupling component 4 snap inside the mounting area 8 of the tubular component 2.

The coupling component 4 mounted on the tubular component 2 is then inserted into the receiving part 6, and finally the coupling component 4 is secured to the receiving part 6 by sliding the clamp 26 transversely until said clamp (or rather the two arms thereof) engage in the slots 24 and 22 formed in the receiving part 6 and in the coupling component 4.

It is understood that the invention is not limited to the embodiments described and shown here, but instead may be subject to modifications relating to the shape and arrangement of parts and design and operating details, according to the numerous possible variants that will appear appropriate to those skilled in the art, and which are to be understood as included within the scope of the invention, as defined by the following claims.

## Claims

1. A coupling assembly for an air conditioning unit of a vehicle, comprising
a tubular component (2) on which a first and a second shoulder (8a, 8b) are formed extending radially outwards and delimiting a mounting area (8),
a coupling component (4) for coupling the tubular component (2) to a receiving part (6), wherein the coupling component (4) constitutes a separate component mounted on the tubular component (2) at said mounting area, and wherein the coupling component (4) is securable to the receiving part (6) by means of a clamp (26) that engages in slots (24, 22) formed in the receiving part (6) and in the coupling component (4),
wherein the coupling component (4) consists of a collar which encircles the tubular component (2) and comprises a plurality of elastic tongues (11) that extend axially forward and radially inwards and are configured to engage in said mounting area of the tubular component (2) at the first shoulder (8a), and an inner shoulder (13) configured to abut axially against said second shoulder,
the assembly being **characterized in that** said inner shoulder is made of a less rigid material than the material of the coupling component (4).

2. The assembly according to claim 1, wherein the coupling component (4) is made of plastics material and the inner shoulder (13) is made of elastomeric material co-molded on the coupling component (4).

3. The assembly according to either of the preceding claims, wherein the inner shoulder (13) is arranged at a level which is radially further outward than the elastic tongues (11) of the coupling component (4).

## Patentansprüche

1. Kopplungsbaugruppe für eine Klimaanlageneinheit eines Fahrzeugs, mit einer rohrförmigen Komponente (2), auf der eine erste und eine zweite Schulter (8a, 8b) sich radial nach außen erstreckend und einen Montierungsbereich (8) begrenzend ausgebildet sind,
einer Kopplungskomponente (4) zum Koppeln der rohrförmigen Komponente (2) an einen Aufnahmeteil (6), bei der die Kopplungskomponente (4) eine separate Komponente darstellt, die auf der rohrförmigen Komponente (2) an dem Montierungsbereich montiert ist, und bei der die Kopplungskomponente (4) an dem Aufnahmeteil (6) mittels einer Klammer (26), die in Schlitze (24, 22), die in dem Aufnahmeteil (6) und in der Kopplungskomponente (4) ausgebildet sind, eingreift, sicherbar ist,
bei der die Kopplungskomponente (4) aus einem Kragen, der die rohrförmige Komponente (2) umgibt und eine Mehrzahl elastischer Zungen (11) aufweist, die sich axial nach vorne und radial nach innen erstrecken und dazu ausgebildet sind, in dem Montierungsbereich der rohrförmigen Komponente (2) an der ersten Schulter (8a) einzugreifen, und einer inneren Schulter (13), die dazu ausgebildet ist, axial an der zweiten Schulter anzuliegen, besteht,
die Baugruppe **dadurch gekennzeichnet ist, dass** die innere Schulter aus einem weniger steifen Material als das Material der Kopplungskomponente (4) ausgebildet ist.

2. Baugruppe nach Anspruch 1, bei der die Kopplungskomponente (4) aus Plastikmaterial ausgebildet ist und die innere Schulter (13) aus Elastomermaterial, das auf der Kopplungskomponente (4) mitgeformt ist, ausgebildet ist.

3. Baugruppe nach einem der vorhergehenden Ansprüche, bei der die innere Schulter (13) an einer Höhe angeordnet ist, die radial weiter auswärts als die elastischen Zungen (11) der Kopplungskomponente (4) ist.

## Revendications

1. Ensemble de couplage pour une unité de climatisation d'un véhicule, comprenant
un élément tubulaire (2) sur lequel un premier et un second épaulement (8a, 8b) sont formés en s'étendant radialement vers l'extérieur et en délimitant une zone de montage (8),
un élément de couplage (4) permettant de coupler l'élément tubulaire (2) à une partie de réception (6), dans lequel l'élément de couplage (4) constitue un élément séparé monté sur l'élément tubulaire (2) au niveau de ladite zone de montage, et dans lequel l'élément de couplage (4) peut être fixé à la partie de réception (6) au moyen d'une attache (26) qui vient en prise dans des fentes (24, 22) formées dans la partie de réception (6) et dans l'élément de couplage (4),
dans lequel l'élément de couplage (4) consiste en un collier qui encercle l'élément tubulaire (2) et comprend une pluralité de languettes élastiques (11) qui s'étendent axialement vers l'avant et radialement vers l'intérieur et sont configurées pour venir en prise dans ladite zone de montage de l'élément tubulaire (2) au niveau du premier épaulement (8a), et un épaulement intérieur (13) configuré pour prendre appui axialement contre ledit second épaulement,
l'ensemble étant **caractérisé en ce que** ledit épaulement intérieur est fait d'un matériau moins rigide que le matériau de l'élément de couplage (4).

2. Ensemble selon la revendication 1, dans lequel l'élément de couplage (4) est fait d'un matériau plastique et l'épaulement intérieur (13) est fait d'un matériau élastomère co-moulé sur l'élément de couplage (4).

3. Ensemble selon l'une ou l'autre des revendications précédentes, dans lequel l'épaulement intérieur (13) est agencé à un niveau qui est radialement plus vers l'extérieur que les languettes élastiques (11) de l'élément de couplage (4).
